# EUROPÄISCHE PATENTSCHRIFT

(11) **EP 0 387 614 B1**
(45) Veröffentlichungstag und Bekanntmachung des Hinweises auf die Patenterteilung: **01.06.1994**
(21) Anmeldenummer: 90103949.5
(22) Anmeldetag: 01.03.1990
(51) Int. Cl.: B29C 45/14, B29C 45/73, B29L 31/56

(54) **Werkzeug zum Spritzgiessen von Kunststoff**
Mould for injection moulding of plastics
Outil pour mouler par injection de la matière plastique

(30) Priorität: 14.03.1989 DE 3908188
(43) Veröffentlichungstag der Anmeldung: 19.09.1990
(73) Patentinhaber: Tetra Laval Holdings & Finance SA, 1009 Pully (CH)
(72) Erfinder: Reil, Wilhelm, D-6142 Bensheim 1 (DE)
(74) Vertreter: Weber, Dieter, Dr.

(56) Entgegenhaltungen:
- DE-A- 2 523 688
- DE-A- 2 941 121
- US-A- 4 462 780
- US-A- 4 622 001

## Beschreibung

Die Erfindung betrifft ein Werkzeug zum Spritzgießen von Kunststoff, mit einer Innenform und einer zweiteiligen Außenform, von welcher zwei im wesentlichen aus Stahl gebildete Formteile längs einer Trennfläche durch Steuerantriebe dichtend aneinanderlegbar und voneinander fortbewegbar sind, wobei der Spritzgießhohlraum durch einen an den Formteilen angeordneten Oberflächenkonturaufbau gebildet ist und auf der dem Spritzgießhohlraum abgewandten Seite hinter dem Oberflächenkonturaufbau Kühlräume angebracht sind.

Zur Herstellung von Flüssigkeitspackungen, insbesondere für Milch und Säfte (Lebensmittel), ist es bereits bekannt, einen Deckel mit Ausgießöffnung - und gegebenenfalls sogar zugleich angespritzt den Griff - an den aus beidseitig mit Kunststoff beschichtetem Papiertubus anzuspritzen, weil solche Flüssigkeitspackungen für die Herstellung und auch für den Endverbraucher Vorteile bringen.

Aus der US-A-4,622,001 ist ein Werkzeug zum Spritzgießen von Kunststoff in Becherform bekannt, bei dem der Spritzgießhohlraum durch zwei fest ineinandergesetzte Innenteile und zwei fest aneinandergesetzte Außenteile gebildet ist, wobei der Oberflächenkonturaufbau von einem einteiligen Innenformteil und entsprechend ein Außenformteil gebildet wird und überwiegend glatte und drehrunde Oberflächen hat. Die Außenform ist in sich fest und erlaubt daher nicht das Öffnen durch Bewegen zweier Formteile voneinander fort. Das Außenformteil selbst enthält Kühlräume, die außen von einem zylindrischen, massiven Werkzeugteil umgeben und abgeschlossen sind. Bei der Innenform ist zwar ein Einsatz axial innen eingeschoben und dort befestigt, er enthält aber die Nuten und Ausnehmungen für Kühlräume, die sich in einem verhältnismäßig großen Abstand von der Oberfläche befinden, die nicht eine komplizierte Kontur hat. Einsätze zum Austausch von an den Formhohlraum angrenzenden Konturaufbauten sind im bekannten Fall nicht vorgesehen.

Der Fachmann kann daher keine Anregungen erhalten, preiswertere Werkzeuge mit verbesserter Kühlung bei komplizierten Oberflächenkonturaufbauten vorzusehen.

Auch aus dem Dokument US-A-4,462,780 ist ein Werkzeug zum Spritzgießen bekannt. Dort sind aber nur zwei relativ zueinander bewegliche Formteile gezeigt, mit denen flache runde Scheiben erstellt werden, wie z.B. Schallplatten. Eine dritte zu diesen Formteilen relativ bewegbare Form ist nicht vorgesehen und wird nicht benötigt Die jeweilige Vorderseite der Formteile weist den erforderlichen Oberflächenkonturaufbau auf, hinter dem Kühlräume angebracht sind. Das dem Verschleiß unterliegende Teil mit dem Oberflächenkonturaufbau enthält auf der Rückseite kreisförmig vertaufende Kühlnuten, die auf der Innenseite von einer glatten Werkzeugscheibe mit Kühlmittelzufuhr abgeschlossen werden. Abgesehen von der beschränkten Anwendung des hiernach bekannten Werkzeuges auf scheibenförmige Produkte haben gerade die verschleißanfälligen Formteile mit dem Oberflächenkonturaufbau auf ihrer Rückseite komplizierte Kühlnuten, deren Herstellungsarbeit verloren ginge, würde man diese Verschleißteile ersetzen wollen. Der Fachmann konnte Anregungen zur Schaffung preiswerter Spritzgießwerkzeuge für allgemeinere Anwendungen aus diesem Dokument nicht erhalten.

Das Anspritzen von Kunststoffdeckeln an den Papiertubus erfolgt nach der DE-A-32 07 701 in einer Papierherstellungsmaschine mit dem Werkzeug der eingangs genannten Art mittels einer Innenform, die als im wesentlichen zylindrischer Dorn ausgebildet ist, der gemeinsam mit drei anderen Domen auf einem Dornrad sitzt und während des Betriebes intermittierend fortgeschaltet wird, wobei jeweils ein Dorn bzw. eine Innenform beim Spritzvorgang angehalten wird und zur Bildung des Spritzgießhohlraumes zwei Formteile von außen im wesentlichen senkrecht über das Ende der Innenform übergreifend so zusammenfahren, daß sie durch entsprechende Steuerantriebe dichtend aneinanderlegbar sind und mit Druck gegeneinandergepreßt und in dieser Position gehalten oder eventuell durch weitere Werkzeugteile arretiert werden. Der auf diese Weise gebildete Spritzgießhohlraum kann dann mit dem geeigneten Kunststoff unter Druck gefüllt werden, so daß das gewünschte Packungsteil, z.B. der Deckel oder der Deckel mit angegossenem Griff, durch Spritzgießen geformt werden.

Der Fachmann weiß aus seiner Praxis und durch die Literatur über solche Spritzgießmaschinen, daß der Oberflächenkonturaufbau kompliziert und mit verhältnismäßig großem Aufwand hergestellt wird, weshalb insbesondere die Außenform - und hierbei jedes der zwei Formteile - teuer ist und eine hohe Standzeit haben sollte. Es sind gerade bei den die Außenform bildenden zwei Formteilen die Stabilität einerseits und die Kühlung andererseits wichtig. Beim Spritzgießen treten nicht unerhebliche Drücke vom Kunststoff aus dem Spritzgießhohlraum nach außen auf dessen Begrenzungswände, nämlich den Oberflächenkonturaufbau, auf. Führt man die Kühlräume zu dicht hinter die den Oberflächenkonturaufbau ausmachenden Oberflächen, dann können diese durch den hohen Druck deformiert werden. Aus Sicherheitsgründen hält man daher einen gewissen Abstand von den Kühlräumen zu den Oberflächen des Gießhohlraumes. Infolge der Ausbildung der Formteile aus Stahl ist außerdem die Wärmeleitfähigkeit von dem in entsprechendem Abstand angeordneten Kühlraum zum Oberflächenkonturaufbau beschränkt. Während man mit Fräswerkzeugen Werkstücke, wie z.B. die Formteile von außen recht gut bearbeiten kann (z.B. den komplizierten Oberflächenkonturaufbau), werden die Kühlräume durch Bohrungen geschaffen. Bohrungen kann man aber bekanntlich nicht mit beliebiger Präzision tief in das Innere eines Formteiles führen. Auch aus diesem Grunde ist es angeraten, die Bohrungen in einem Sicherheitsmindestabstand vom Oberflächenkonturaufbau des jeweiligen Formteiles zu halten. Die Anordnung der Kühlräume bezüglich des Oberflächenkonturaufbaues einerseits und das Material des Formteiles aus Stahl andererseits ergeben eine mangelhafte Kühlung, so daß die Leistung der Spritzgießmaschinen nicht in dem erwünschten Maße gesteigert werden kann.

Ein weiterer Nachteil ist durch die Tatsache des allgemeinen Betriebsverschleißes gegeben, es muß nämlich nach einer gewissen Standzeit das gesamte Formteil mit seinem Oberflächenkonturaufbau durch ein neues ersetzt werden, um einwandfreie Spritzteile an den Packungen zu garantieren.

Der Erfindung liegt daher die Aufgabe zugrunde, ein Werkzeug zum Spritzgießen von Kunststoff der eingangs genannten Art so zu verbessern, daß die Leistung der Packungsherstellungsmaschine verbessert werden kann, weil die Kühlung der Formungsfläche bzw. des Oberflächenkonturaufbaues verbessert ist, wobei vorzugsweise auch preiswertere Werkzeuge für den Spritzgießhohlraum eingesetzt werden sollen.

Erfindungsgemäß wird diese Aufgabe dadurch gelöst, daß die Kühlräume auf wenigstens einer Seite von einem Einsatz begrenzt sind, der in einer Ausnehmung in dem jeweiligen Formteil flüssigkeitsdicht befestigt ist. Der Kühlraum bzw. die Kühlräume sind erfindungsgemäß nicht mehr durch Bohrungen im Inneren des stählernen Formteils gebildet sondern können von einer offenen Seite direkt von einem Werkzeug zugänglich hergestellt werden, denn die offene Seite ist von einem Einsatz begrenzt. Entweder sind die Kühlräume auf der einen Seite im Einsatz angebracht, oder der Einsatz verschließt die an der Oberfläche des stählernen Formteiles befindlichen Kühlräume nach außen ab. Im jeweiligen Formteil befindet sich eine Ausnehmung, in welcher der Einsatz eingelassen und befestigt ist, und zwar flüssigkeitsdicht, so daß beispielsweise Kühlwasser, welches durch geeignete Kanäle den Kühlräumen zugeführt und aus diesen abgeführt wird, strömen kann. Die Befestigung kann beispielsweise durch Verschraubung erfolgen. Mit anderen Worten ist also der Einsatz neben den Kühlräumen mit dem Formteil verschraubt.

Besonders zweckmäßig ist es, wenn erfindungsgemäß die Kühlräume auf ihrer wenigstens einen Seite an eine ebene Fläche angrenzen und mit mindestens einem Kühlwasserkanal verbunden sind. Somit kann auch ein kompliziert aufgebautes Kühlraumsystem durch Fräsen hergestellt werden, weil das Fräswerkzeug auf die ebene Fläche neben den Kühlräumen angesetzt und von hier aus in das Material eingreifen kann. Bei der einen Ausführungsform werden die Kühlräume in den Einsatz selbst eingefräst, bei der anderen Ausführungsform werden die Kühlräume in das Formteil eingefräst, und die ebene Fläche der dann offenen Seite der Kühlräume wird durch den Einsatz abgedeckt. Dabei kann man die ganze Fläche des Kühlraumsystems abdecken und folglich zuvor auch leicht herstellen. Man wird die eine oder die andere Ausführungsform je nach der Stabilität auswählen, die von dem betreffenden Oberflächenkonturaufbau verlangt wird.

Für die Erfindung ist es besonders vorteilhaft, wenn wenigstens eine Oberfläche des am Formteil befestigten und vorzugsweise aus einem Material mit größerer Wärmeleitfähigkeit als Stahl gebildeten Einsatzes mit einem Teil der Oberflächen des Formteils bündig abschließt. Zu dem oben erwähnten Vorteil der besonders leichten Herstellbarkeit von Kühlräumen und -systemen durch Fräsen bringt auch die größere Wärmeleitfähigkeit des Einsatzes Kühlvorteile mit sich. Im Gegensatz zu den Bohrungen, die manchmal verlaufen konnten und daher im Sicherheitsabstand vom Oberflächenkonturaufbau gehalten wurden, kann man durch das Ausfräsen in alle Räume dicht neben den Spritzgießhohlraum gelangen, d.h. man kommt nahe an die später mit Kunststoff gefüllten und stark zu kühlenden Stellen heran. Ein weiterer Vorteil ist der, daß der Oberflächenkonturaufbau verständlicherweise am ehesten durch Verschleiß abgenutzt ist, und wenn sich dieser bei den oben beschriebenen Ausführungsformen der ersten Art im Einsatz befinden, braucht man nur den Einsatz durch einen neuen auszutauschen, ohne das ganze Formteil ersetzen zu müssen. Der Einsatz selbst ist einfacher und preiswerter. Bei der anderen Ausführungsform befindet sich das Kühlraumsystem zwar im Stahl des Formteiles direkt hinter dem Oberflächenkonturaufbau, die offene Rückseite der Kühlräume ist aber durch den besser wärmeleitfähigen Einsatz abgedeckt, der für eine noch bessere Abführung der von der Kühlflüssigkeit aufgenommenen Wärme sorgt.

Günstig ist es erfindungsgemäß auch, wenn der Einsatz eine innere ebene Oberfläche aufweist, welche unter Begrenzung des Kühlraumes flüssigkeitsdicht auf der ebenen Fläche des denselben Kühlraum aufnehmenden Formteils aufliegt. Hier handelt es sich um die zweite der beiden oben jeweils genannten alternativen Ausführungsformen, nämlich der, bei welcher der Kühlraum bzw. die Kühlräume im Formteil eingefräst ist bzw. sind und die freie Seite mit der ebenen Fläche vom Einsatz flüssigkeitsdicht abgedeckt ist. Das Kühlraumsystem kann beispielsweise aus spiralförmig oder serpentinartig geführten Nuten bestehen, zwischen denen Stege stehengeblieben sind, auf deren äußerer Oberfläche, welche dann die gemeinsame ebene Fläche bildet, der Einsatz sich abstützt. Durch die glatte, ebene Oberfläche, auf welcher der Einsatz abgestützt wird, kann man bei der Herstellung des Formteils die Fräswerkzeuge ansetzen und die Kühlraumnuten in dem gewünschten Muster aus dem Stahl herausarbeiten und dabei die Kühlräume bis dicht hinter die Flächen des Oberflächenkonturaufbaues bringen.

Bei dieser Ausführungsform stellt der Einsatz wie ein Pfropfen oder Deckel eine Art Verschluß für die Ausnehmung im jeweiligen Formteil bzw. dichtende Abdeckung des darunter befindlichen, einseitig vor Auflegen des Einsatzes offenen Kühlraumes dar. Die jeweils äußere Oberfläche des Einsatzes kann mit der benachbarten äußeren Oberfläche des Formteiles bündig abschließen.

Erfindungsgemäß ist bei einer bevorzugten Ausführungsform also der Kühlraum durch im Formteil eingefräste Nuten mit dazwischen angeordneten Stegen gebildet, und die äußere Oberfläche der Stege sowie der Umrandung der Nuten bildet die ebene Fläche des Formteils, auf welcher der Einsatz aufliegt.

Denkbar ist aber auch die andere der beiden oben genannten alternativen Ausführungsformen, deren jeweils erste Art von Ausführungsform bei einer zweckmäßigen Ausgestaltung der Erfindung dadurch gekennzeichnet ist, daß der spielfrei im Formteil angebrachte Einsatz eine innere ebene Oberfläche aufweist, von welcher ausgehend sich mindestens ein Kühlraum in das Material des Einsatzes erstreckt, und daß der Einsatz gegenüberliegend eine äußere ebene Oberfläche aufweist, die einen Teil der Trennfläche des Formteils bildet und den Oberflächenkonturaufbau des Spritzgießhohlraumes aufweist. Bei dieser Ausführungsform wird die äußere ebene Oberfläche zweckmäßig bündig mit der benachbarten Oberfläche des Formteils ausgebildet sein, weil die gesamte, über beide Teile (Einsatz und Formteil) hinweggehende, gemeinsame Oberfläche an der Trennfläche des zweiteiligen Spritzwerkzeuges (die beiden Formteile) liegt. Dabei versteht es sich, daß der Oberflächenkonturaufbau des Spritzgießhohlraumes aus diesem Teil der äußeren ebenen Oberfläche herausgearbeitet wurde, vorzugsweise durch Fräsen. Während bei der vorstehend genannten Ausführungsform die Kühlräume in den Stahl gefräst wurden, erfolgt bei dieser Ausführungsform das Fräsen aus dem Material des Einsatzes. Besteht der Einsatz beispielsweise aus Aluminium, dann ist die Oberfläche des Konturaufbaues also eine Aluminiumfläche. Mit anderen Worten wird der Spritzgießhohlraum beidseitig durch die Aluminiumeinsätze gebildet. Selbstverständlich kann man sich aber auch andere gut wärmeleitende Materialien vorstellen, vorzugsweise Metalle wegen der Stabilität.

Beiden Ausführungsformen gemeinsam ist die gute Anbringmöglichkeit des oder der Kühlräume, um einen günstigen Kühleffekt zu erzielen und die Kühlflüssigkeit möglichst nahe an die Formungsflächen, d.h. an den Oberflächenkonturaufbau, heranzuführen, um die Wärme von diesem Aufbau abzuführen. Damit kann man aber die Leistung der Packungsherstellungsmaschine erhöhen, denn die Kühlung der aus den zwei Formteilen bestehenden Außenform gelingt durch die erfindungsgemäßen Maßnahmen schneller mit der Folge einer erhöhten Leistung der mit diesem Spritzwerkzeug ausgestatteten Maschine.

Auch die hier beschriebene bevorzugte Ausführungsform kann bevorzugt so ausgestaltet sein, daß der Kühlraum durch im Einsatz eingefräste Nuten mit dazwischen angeordneten Stegen gebildet ist und die äußere Oberfläche der Stege sowie der Umrandung der Nuten die innere ebene Oberfläche des Einsatzes bildet, über welche der Einsatz gegen die ebene Fläche der Ausnehmung im Formteil flüssigkeitsdicht anpreßbar ist. Während bei der zuvor beschriebenen Ausführungsform der Einsatz wie ein Deckel oder Stopfen die Nuten im Stahlkörper verschlossen hat und gegebenenfalls auf mehreren Seiten ebene Flächen haben kann, weist bei der hier beschriebenen Ausführungsform der Einsatz auf der einen Seite den Oberflächenkonturaufbau zur Bildung des Spritzgießhohlraumes und gegenüberliegend auf der anderen Seite des Kühlsystems auf, vorzugsweise durch Nuten mit dazwischen angeordneten Stegen. Die Stege können hier in Draufsicht senkrecht auf diese innere ebene Oberfläche blickend die verschiedensten Formen haben, z.B. trapezförmig, kreisförmig, oval, länglich oder dergleichen. Jedenfalls bilden sie die Abstützung des Einsatzes auf der ebenen Fläche der Ausnehmung im Formteil, so daß damit auch der Oberflächenkonturaufbau vom Formteil abgestützt ist. Man erkennt, daß trotz eines Einsatzes ein Werkzeug mit hoher Beanspruchungsmöglichkeit geschaffen ist.

Eine spezielle vorteilhafte Ausführungsform der Erfindung ist weiterhin dadurch gekennzeichnet, daß der Einsatz als etwa trapezförmige Platte ausgestaltet ist, die zusammen mit der bezüglich der Trennfläche spiegelsymmetrisch ausgebildeten Platte des anderen Formteils im wesentlichen eine Hälfte des Spritzgießhohlraumes von wenigstens einer Seite her abdeckt. Handelt es sich um kleinere Spritzgießhohlräume, dann können diese durch zwei dieser spiegelsymmetrisch ausgebildeten Platten vollständig gebildet und abgedeckt sein. Handelt es sich beispielsweise aber um einen Spritzgießhohlraum, dessen einer Teil den Deckel und dessen anderer Teil einen am Deckel angespritzten Griff darstellt bzw. den Raum für den diese Teile bildenden Kunststoff darstellt, dann reicht ein Paar von Einsätzen häufig nicht aus, und man wird dann zwei Paare von Einsätzen in der entsprechenden Lage zueinander anordnen. Es hat sich gezeigt, daß die zu kühlenden Kunststoffvolumina wie letztlich auch der Deckel einer Flüssigkeitspackung flache und dünne Räume sind, so daß ein hinter dem Oberflächenkonturaufbau angeordnetes Kühlraumsystem diesen flachen dünnen Spritzgießhohlraum im wesentlichen vollständig abdecken sollte. Bei Deckeln von Flüssigkeitspackungen in Packungsherstellungsmaschinen ist es zweckmäßig, den Einsatz trapezförmig auszubilden, insbesondere bei einer solchen Art von Packung, bei der am Deckel aus Kunststoff zugleich auch der Griff aus Kunststoff an den Papiertubus angespritzt werden soll. Der Griff steht vom Tubusmaterial, d.h. vom Papier, in einem Abstand von 1 bis 3 und vorzugsweise etwa 2 cm ab, so daß in Seitenansicht des Griffes die gesamte den Griff bildende Fläche am besten durch eine trapezförmige Platte abgedeckt wird. Verwendet man gemäß vorstehendem Vorschlag ein Paar von Einsätzen, d.h. ein Paar von trapezförmigen Platten, dann ist im wesentlichen der Spritzgießhohlraum für den Griff abgedeckt, und hierbei handelt es sich im wesentlichen um die eine Hälfte des Spritzgießhohlraumes.

Bei einem bevorzugten Werkzeug einer sehr zweckmäßigen Ausführungsform der Erfindung kann man das eben beschriebene Paar von Einsätzen in Trapezform so anordnen, daß die Trapezform den Betrachter in Blickrichtung senkrecht auf die Trennfläche zwischen den beiden Formteilen erscheint; während für wesentliche Teile des am Griff anzuspritzenden Deckels, insbesondere in Verbindung mit der Ausgießöffnung des Deckels, von einem anderen Paar von Einsätzen abgedeckt ist, deren Form im wesentlichen ebenfalls trapezförmig sein kann, wobei dem Betrachter hier aber die Trapezform in Blickrichtung senkrecht auf den Deckel erscheint, d.h. in Richtung der Trennfläche und in Richtung der Längsachse des Papiertubus. Dieses Paar von Einsätzen im Bereich der Ausgießtülle der Öffnungsvorrichtung am Deckel ist also nebeneinander angeordnet, wobei der eine Einsatz des zuletzt genannten Paares den anderen nicht zu berühren braucht. Beide Einsätze sind nebeneinander angeordnet und decken wieder die wesentlichen Teile der zu kühlenden Fläche des Deckels ab.

Vorteilhaft ist es gemäß der Erfindung ferner, wenn das Volumen des Kühlraumes das überwiegende Volumen des Einsatzes ausmacht. Das Volumen des Kühlraumes ist bezüglich des Materials des Einsatzes also groß, wodurch ein sehr hoher Kühleffekt erreicht wird. Mit anderen Worten ist die den Kühlraum begrenzende Fläche fast so groß wie die Außenfläche des Einsatzes. Die Stege und Ränder des Einsatzes sind dadurch mit Vorteil so dünn und klein ausgebildet, daß sich ein großer Kühleffekt ergibt und doch eine ausreichende Festigkeit vor allen Dingen gegen die Druckkräfte beim Schließen der Formwerkzeuge gewährleistet ist. Dies ist besonders günstig, wenn der Kühlraum durch die stegartigen Abstützteile unterbrochen wird, denn dadurch erhält der Einsatz seine hohe mechanische Stabilität Obwohl also hinter dem ganzen Oberflächenkonturaufbau im Bereich des Einsatzes eine große Fläche des Kühlraumsystems angeordnet ist, können dennoch hohe Spritzdrücke im Spritzgießhohlraum auftreten, ohne daß der Einsatz beschädigt würde und die Formflächen verbiegen würden.

Die erhöhte Leistung einer Packungsherstellungsmaschine ist das überraschendste Ergebnis der erfindungsgemäßen Maßnahmen, denn es wurden mit einfachen Mitteln Engpässe bei der Abkühlzeit der Außenform des Spritzwerkzeuges überwunden. Gleichzeitig kann das Kühlraumsystem mit Fräswerkzeugen sehr zweckmäßig ausgestaltet werden, und die Kühlräume können ganz nahe an die kritischen Hohlräume zu Spritzgießen herangeführt werden mit der Folge einer guten Wärmeableitung und effektiven Kühlung des Spritzgießhohlraumes. Durch geeignete Auswahl des Einsatzmaterials kann man die Wärmeleitfähigkeit steigern und damit den Kühleffekt weiter erhöhen. Auch die Wirtschaftlichkeit des Spritzwerkzeuges kann auf diese Weise verbessert werden, weil das am meisten dem Verschleiß unterworfene Teil die eigentliche Spritzform ist, die hier wenigstens teilweise durch einen Einsatz gebildet wird. Nach entsprechender, üblicher Abnutzung braucht durch die erfindungsgemäßen Maßnahmen nur ein Einsatz durch einen neuen ausgetauscht zu werden, nicht aber das ganze Spritzwerkzeug.

Vorteilhaft ist daher erfindungsgemäß die Verwendung des Werkzeuges der vorstehend beschriebenen Art zum Anspritzen von Deckel und/oder Boden mit oder ohne Griff an den Papiertubus einer Flüssigkeitspackung.

Ausführungsbeispiele der Erfindung sind in der Zeichnung dargestellt und werden im folgenden näher beschrieben.

Es zeigen:
- Figur 1: perspektivisch eine bevorzugte Ausführungsform einer Flüssigkeitspackung mit Deckel und angepsritztem Griff zur Veranschaulichung des Endproduktes, welches mit dem zu beschreibenden Spritzwerkzeug hergestellt werden soll,
- Figur 2: die Draufsicht auf zwei im wesentlichen bezüglich der mittleren Trennfläche spiegelbildlich aufgebauten Formteile mit den Einsätzen,
- Figur 3: eine Seitenansicht auf das linke Formteil der Figur 2, beispielsweise wenn man das rechte Formteil entfernt und auf die Trennfläche blickt,
- Figur 4: den Einsatz im Bereich des Griffes von der Seite des Kühlraumes her,
- Figur 5: eine Schnittansicht entlang der Linie B-B der Figur 4,
- Figur 6: die andere Ansicht des Einsatzes, und zwar bezüglich Figur 4 von der gegenüberliegenden Seite mit Darstellung des Oberflächenkonturaufbaues,
- Figur 7: eine Schnittansicht entlang der Linie A-A der Figur 6,
- Figur 8: in zwei verschiedenen Schnittansichten die Formteile, wenn man in Figur 2 von unten nach oben blickt, wobei der Schnitt entlang der Linie C-C der Figur 9 genommen ist und
- Figur 9: eine teilweise geschnittene Draufsicht auf die Formteile ähnlich Figur 2, wobei jedoch die Kühlraumsysteme im Bereich des Deckels mit der Ausgießvorrichtung zu erkennen sind.

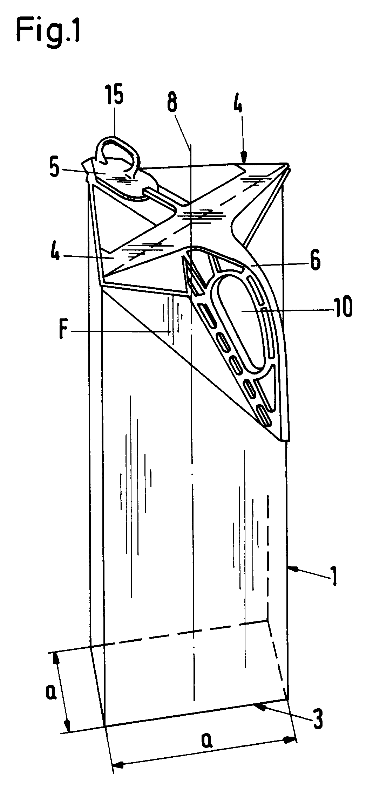

In Figur 1 ist perspektivisch das Produkt der Packungsherstellungsmaschine, d.h. die Packung selbst, gezeigt, um das Verständnis des später zu beschreibenden Spritzgießhohlraumes und auch der anderen Werkzeugteile zu verbessern. Die in Figur 1 gezeigte Packung besteht aus einem Papiertubus 1 mit quadratischem Querschnitt, wobei seine Bodenkante 3 die Breite a und die Länge a hat, also ein Quadrat aufspannt. Auf der gegenüberliegenden Seite des Tubus 1 befindet sich der allgemein mit 4 bezeichnete Deckel, der aus Kunststoff an das mit Kunststoff beschichtete Papiermaterial des Tubus 1 angespritzt ist. Zusammen mit dem Deckel 4 wird seine Öffnungsvorrichtung 5 mit seiner Aufreißlasche 15 und auf der gegenüberliegenden Seite dem Griff 6 mit Greiföffnung 10 angespritzt. Man erkennt, daß die aus Papier gebildete Fläche F neben dem Griff 6 unter einem Winkel zur Ebene des Deckels 4 steht. Die senkrecht durch die Ebene des Deckels 4 verlaufende Längsmittelachse der Packung und des Tubus 1 ist strichpunktiert gezeigt und mit 8 bezeichnet.

Bezüglich der Kühlung von gespritztem Kunststoff ist der von der dreieckigen Fläche F abgewandte Teil des Griffes 6 besonders kritisch, weil der Kunststoff sich selbst stützt und nicht an Papierflächen angespritzt ist, wie dies im Bereich des Deckels 4 der Fall ist.

Der Hersteller der Spritzgießwerkzeuge für den Deckel 4 mit Griff 6 gemäß der Packung nach Figur 1 hat sich zur Aufgabe gestellt, den Spritzgießhohlraum für den Griff 6 besonders zu kühlen, aber auch den Deckel 4 mit der Öffnungsvorrichtung 5 und der Aufreißlasche 15 mit verbesserter Kühlung zu versehen.

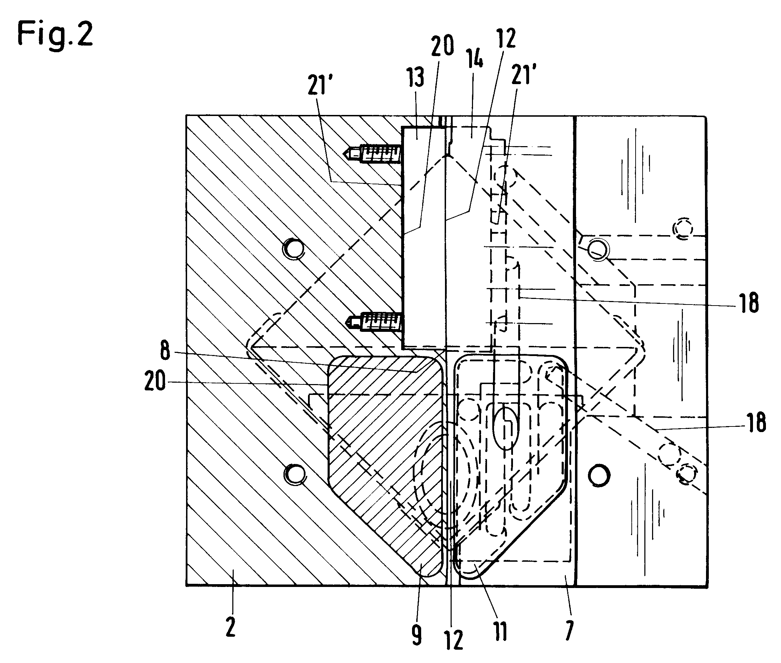

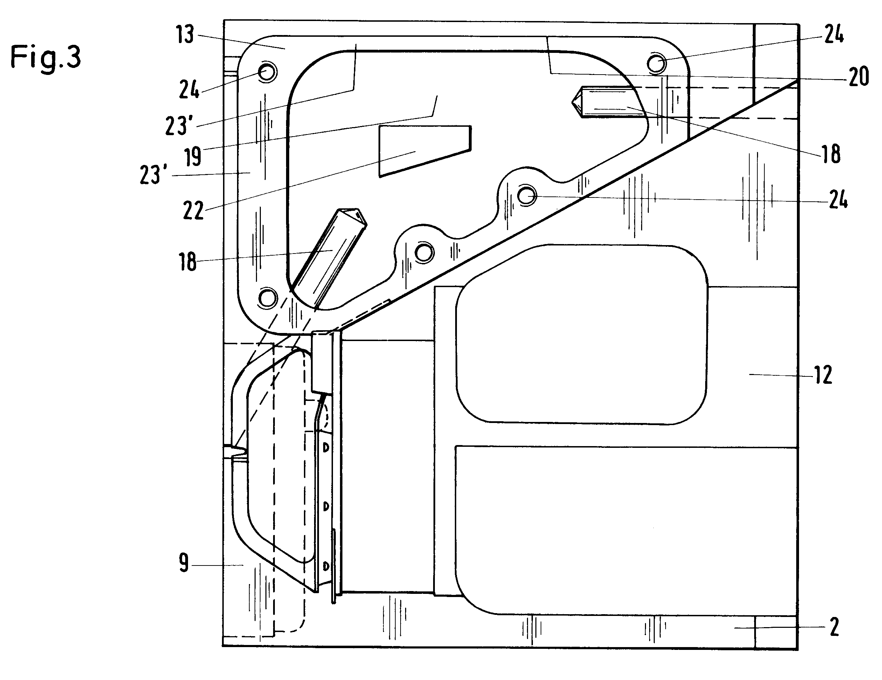

Deshalb zeigt Figur 2 in der Draufsicht der Formteile 2 und 7 das erste Paar von Einsätzen 9 und 11 mit Trapezform in Blickrichtung der Längsmittelachse 8, welche durch die Trennfläche 12 verläuft, und dem zweiten Paar von Einsätzen 13 und 14, deren Trapezform aus den Figuren 3, 4 und 6 in einer Ansicht senkrecht auf die Trennfläche 12 zu erkennen ist.

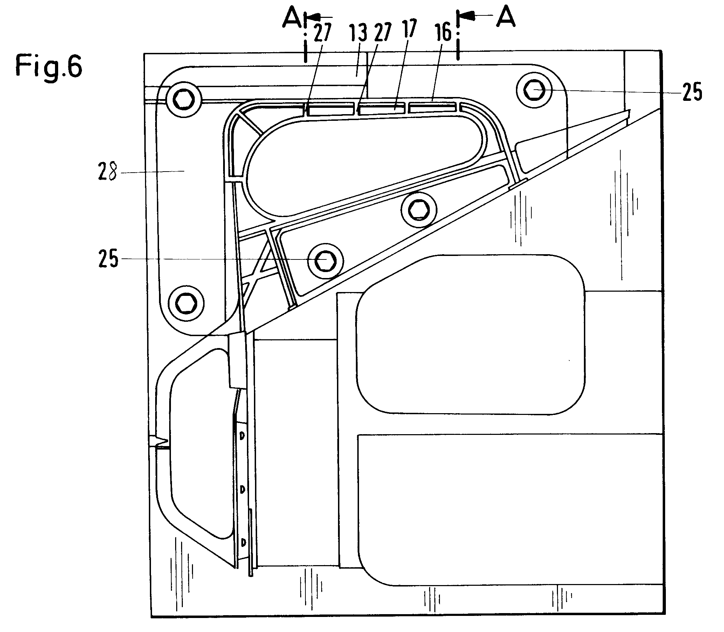

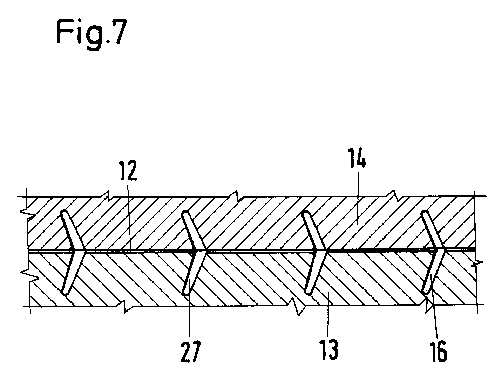

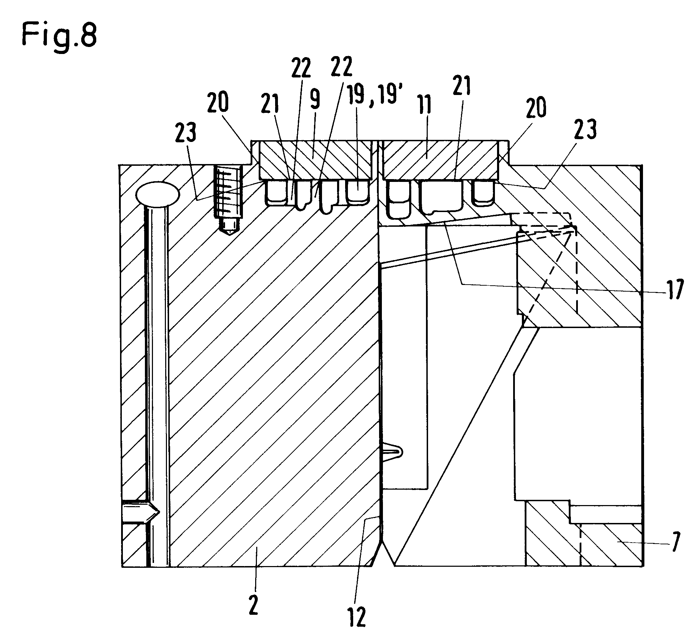

Die Außenform des Spritzgießwerkzeuges wird also durch die beiden Formteile 2 und 7 gebildet. In den Figuren 2, 8 und 9 sieht man, wie die Formteile 2 und 7 durch nicht dargestellte Steuerantriebe mit Druck längs der Trennfläche 12 dichtend aneinandergepreßt sind. Dadurch ergibt sich ein Spritzgießhohlraum 16, der nur in den Figuren 6 und 7 teilweise zu sehen ist. Bei den anderen Darstellungen blickt man zumeist auf den Oberflächenkonturaufbau 17, dessen Gegenkonturaufbau des Innendornes fehlt, weil dieser nicht dargestellt ist. Beispielsweise erkennt man in der rechten Hälfte der Schnittdarstellung der Figur 8 einen Hohlraum unter dem Oberflächenkonturaufbau 17, in welchen der nicht gezeigte Innendorn eingeführt werden kann. Der Spritzgießhohlraum 16 schließt sich dann in Figur 8 rechts unter der den Oberflächenkonturaufbau 17 darstellenden Linie nach unten an.

Während bei den herkömmlichen Werkzeugen die Kühlräume nur durch Bohrungen gebildet werden konnten, wie hier bei dem erfindungsgemäßen Aufbau die Kühlwasserkanäle 18 gezeigt sind, die bei der hier gezeigten Ausführungsform nur den Zu- und Ablauf für Kühlwasser schaffen, ist der Kühlraum bzw. sind die Kühlräume 19 hier eingefräst.

Es werden im folgenden zwei verschiedene Ausführungsformen von Einsätzen 9, 11 einerseits und 13, 14 andererseits gezeigt, wobei sich die Figuren 2, 8 und 9 auf die Einsätze 9, 11 für die bessere Kühlung des Deckels 4 mit Ausgießvorrichtung 5 beziehen und das Paar von Einsätzen 13 und 14 anhand der Figuren 2 bis 7 erläutert wird, wobei hier die Kühlung im Bereich des Griffes 6 besprochen wird.

Beiden Ausführungsformen von Einsätzen gemeinsam ist jeweils die Ausnehmung 20 im Formteil 9, 11 bzw. 13, 14. Bei beiden Arten von Einsätzen 9, 11; 13, 14 grenzen die Kühlräume an eine ebene Fläche an, und zwar bei der Ausführungsform der Einsätze 9 und 11 an die ebene Fläche 21; und bei den Einsätzen 13, 14 die ebene Fläche 21′, die gleichzeitig auch die Grundfläche der Ausnehmung 20 im Einsatz 13 bzw. 14 ist.

Bei der Draufsicht der Figur 6 mit dem Spritzgießhohlraum 16 blickt der Betrachter praktisch auf die äußere Oberfläche 28 des Einsatzes 13, in welcher ja der Oberflächenaufbau 17 gebildet ist. Diese Oberfläche 28 des am Formteil 2, 7 zu befestigenden Einsatzes 13 oder 14 schließt mit einem Teil der Oberfläche 12 des Formteils 2, 7 bündig ab, denn diese Oberfläche 12 des Formteiles ist gleichzeitig die Trennfläche 12.

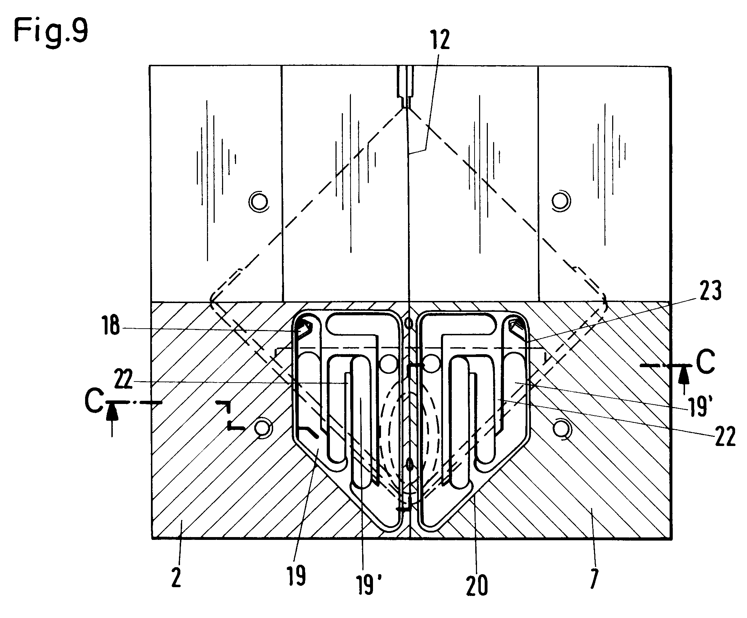

Anders ist dies bei der Ausführungsform von Einsätzen 9, 11, die jetzt insbesondere anhand der Figuren 8 und 9 näher beschrieben werden.

Der vorzugsweise aus Aluminium bestehende Einsatz 9 bzw. 11 hat eine innere ebene Oberfläche, die mit 21 bezeichnet wird, weil sie mit der ebenen Fläche zusammenfällt, an welche die darunterbefindlichen Kühlräume 19 angrenzen. Dies ist gleichzeitig auch die ebene Fläche des Formteils 2 bzw. 7. Man sieht insbesondere aus der Draufsicht der Figur 9, bei welcher die Einsätze 9 und 11 abgenommen sind, wie serpentinartig Nuten 19′ in den Stahl des Formteils 2 und auch 7 eingefräst sind, wobei dazwischen angeordnete Stege 22 belassen sind, die zusammen mit der Umrandung 23 der Nuten 19′ die schon erwähnte ebene Abstützfläche 21 bilden. Auch an dieser liegt der Einsatz 9, 11 flüssigkeitsdicht an.

Blickt man in Figur 1 von links oben auf die Ausgießspitze der Öffnungsvorrichtung 5, dann ist Figur 8 bezüglich des Werkzeuges für den Deckel die entsprechende Ansicht. Der obere mittlere Punkt der beiden Formteile 2 und 7 liegt in der Nähe der Spitze der gestrichelt in Figur 9 zu erkennenden Öffnungsvorrichtung 5. Man sieht, wie die trapezförmige Fläche, deren Spitze jeweils der anderen Fläche des Paares von Einsätzen gegenüberliegt, die kritische, zu kühlende Fläche abdeckt. Aus Figur 8 sieht man, wie dicht der Kühlraum 19 bzw. die Nuten 19′ an die Formfläche, welche ja der Oberflächenkonturaufbau 17 ist, heranreichen.

Im Betrieb kann Kühlflüssigkeit durch die Kühlwasserkanäle 18 herangeführt bzw. abgeführt werden und durch die Nuten 19′ kanalartig so strömen, daß die durch das Spritzen des Kunststoffes entstandene Wärme schnell abgeführt und der Kunststoff in kurzer Zeit ausreichend gehärtet wird. Wenn Deckel und Griff ausreichend gehärtet sind, können die beiden Formteile 2 und 7 mitsamt den an ihnen angebrachten Einsätzen 9 und 11 auseinanderfahren, wobei die Bewegung bezüglich der Trennfläche 12 symmetrisch ist und die Packung dann seitlich herausgedreht werden kann, beispielsweise gemäß Figuren 2 und 9 nach oben oder unten in Richtung der Trennfläche 12.

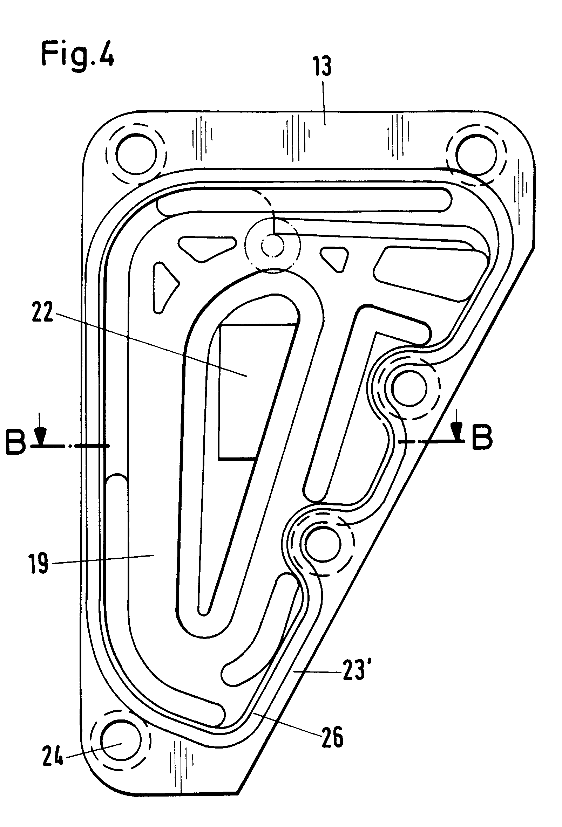

Die andere Ausführungsform von Einsätzen 13 und 14 erkennt man hauptsächlich aus den Figuren 2 bis 7. Der Kühlraum der Figur 3 ist großflächig ausgebildet und hat beispielsweise in der Mitte eine trapezförmige Stützfläche, die der einheitlichen Bezeichnung wegen hier als Steg 22 bezeichnet ist, wenngleich keine exakte Stegform vorliegt. Ein solcher Stützkörper wie der bei 22 in den Figuren 3 und 4 gezeigte Körper, kann auch andere Außenkonturen haben, z.B. kreisförmig, oval, winkelig oder dergleichen. Es ist aus Stabilitätsgründen zur Aufnahme der hohen Spritzdrücke zweckmäßig, außer dem zentralen Steg 22 noch weitere, hier nicht näher gezeichnete Druckaufnahmestege vorzusehen. Diese Stege 22 erstrecken sich vom Grund des Kühlraumes 19, d.h. bei der Ansicht der Figur 2 von der Fläche 20 bzw. 21′ bis zur Höhe der Trennfläche 12.

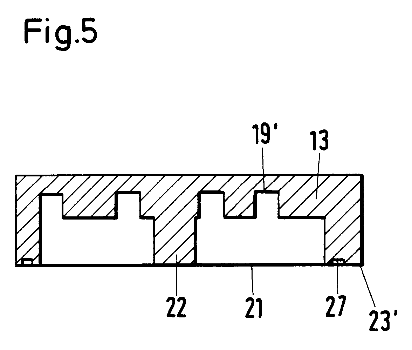

In Blickrichtung auf die Trennfläche 12 erscheint dem Betrachter deutlich die Trapezform in den Figuren 3, 4 und 6. Entsprechend ist auch die Umrandung 23′ dieses Einsatzes 13 bzw. 14 trapezförmig. Sie ist besonders dick an den Befestigungsbohrungen 24 ausgestaltet. In Figur 6 sieht man bereits die Verankerungsschrauben 25, welche sich durch die Befestigungsbohrungen 24 in der Umrandung 23′ erstrecken. In Figur 4 erkennt man außerdem eine Dichtschnur 26, die manin eine in Figur 5 gezeigte seichte Nut 27 einlegt, um den Einsatz 13 bzw. 14 flüssigkeitsdicht auf den Grund der Ausnehmung 20 im Formteil 2, 7 anzuordnen. Nur dann kann Kühlwasser im Betrieb in gewünschter Weise in den Kühlraum 19 eingeführt und z.B. an der gegenüberliegenden Seite wieder abgeführt werden, ohne den laufenden Spritzbetrieb zu beeinträchtigen. Dabei ist es günstig, wenn gemäß Darstellung der Figur 4 die Dichtschnur 26 alle Befestigungsbohrungen 24 in der Umrandung 23′ außen angeordnet beläßt bzw. innerhalb derselben verläuft.

Um von dem großen Kühlraum 19 nach den Figuren 4 und 5 an besonders kritischen Stellen möglichst dicht an die Formfläche bzw. den Oberflächenkonturaufbau 17 des Spritzhohlraumes 16 heranzukommen, sind bei der in den Figuren 5 bis 7 dargestellten Ausführungsform zusätzlich noch vertiefte Nuten 19′ eingefräst, so daß der Abstand vom Grund dieser Nuten 19′ zum Oberflächenkonturaufbau 17 so gering wird, daß Wärme gut vom Spritzgießhohlraum 16 abgeführt wird, zumal auch der Einsatz 13 bzw. 14 aus einem gut wärmeleitfähigen Material hergestellt wird, z.B. Aluminium.

Figur 6 zeigt die Draufsicht auf die (bezüglich Figur 4) andere Seite des Einsatzes 13, nämlich auf den Oberflächenkonturaufbau 17 blickend. Man erkennt einen Spritzgießhohlraum 16, der nach Füllen mit Kunststoff, Aushärten und Abziehen des Werkzeuges etwa dem Griff 6 der Packung der Figur 1 entspricht. Bei der speziellen Ausführungsform muß er exakt diesen Griff geben.

Wie zum besseren Entformen kleine Rippen 27 zur Versteifung am Griff 6 vorgesehen und daher auch im Werkzeug gemäß Figur 6 angeordnet sind, sieht man auf beiden Seiten der Trennfläche 12 auch deutlich in Figur 7.

Im Betrieb werden die Einsätze 9, 11 und 13, 14 an der jeweiliegen Formhälfte 2, 7 angeschraubt, die Kühlwasserkanäle 18 werden angeschlossen, und dann sind alle Kühlräume 19 mit Kühlwasser durchströmt. Besonders die Verschleißteile 13 und 14 können leicht ausgetauscht werden.

## Patentansprüche

1. Werkzeug zum Spritzgießen von Kunststoff, mit einer Innenform und einer zweiteiligen Außenform (2, 7), von welcher zwei im wesentlichen aus Stahl gebildete Formteile (2, 7) längs einer Trennfläche (12) durch Steuerantriebe dichtend aneinanderlegbar und voneinander fortbewegbar sind, wobei der Spritzgießhohlraum (16) durch einen an den Formteilen (2, 7) angeordneten Oberflächenkonturaufbau (17) gebildet ist und auf der dem Spritzgießhohlraum (16) abgewandten Seite hinter dem Oberflächenkonturaufbau (17) Kühlräume (19) angebracht sind, **dadurch gekennzeichnet**, daß die Kühlräume (19) auf wenigstens einer Seite von einem Einsatz (9, 11; 13, 14) begrenzt sind, der in einer Ausnehmung (20) in dem jeweiligen Formteil (2, 7) flüssigkeitsdicht befestigt ist.

2. Werkzeug nach Anspruch 1, dadurch gekennzeichnet, daß die Kühlräume (19) auf ihrer wenigstens einen Seite an eine ebene Fläche (21; 21′) angrenzen und mit mindestens einem Kühlwasserkanal (18) verbunden sind.

3. Werkzeug nach Anspruch 1 oder 2, dadurch gekennzeichnet, daß wenigstens eine Oberfläche (28) des am Formteil (2, 7) befestigten und vorzugsweise aus einem Material mit größerer Wärmeleitfähigkeit als Stahl gebildeten Einsatzes (13, 14) mit einem Teil der Oberflächen (12) des Fromteiles (2, 7) bündig abschließt.

4. Werkzeug nach einem der Ansprüche 1 bis 3, dadurch gekennzeichnet, daß der Einsatz (9, 11) eine innere ebene Oberfläche (21) aufweist, welche unter Begrenzung des Kühlraumes (19) flüssigkeitsdicht auf der ebenen Fläche (21) des denselben Kühlraum (19) aufnehmenden Formteils (2, 7) aufliegt (Figuren 8 und 9).

5. Werkzeug nach Anspruch 4, dadurch gekennzeichnet, daß der Kühlraum (19) durch im Formteil (2, 7) eingefräste Nuten (19′) mit dazwischen angeordneten Stegen (22) gebildet ist und die äußere Oberfläche (21) der Stege (22) sowie der Umrandung (23, 23′) der Nuten (19′) die ebene Fläche (21) des Formteiles (2, 7) bildet, auf welcher (21) der Einsatz (9, 11) aufliegt (Figuren 8 und 9).

6. Werkzeug nach einem der Ansprüche 1 bis 3, dadurch gekennzeichnet, daß der spielfrei im Formteil (2, 7) angebrachte Einsatz (13, 14) eine innere ebene Oberfläche (21′) aufweist, von welcher ausgehend sich mindestens ein Kühlraum (19) in das Material des Einsatzes (13, 14) erstreckt und daß der Einsatz (13, 14) gegenüberliegend eine äußere ebene Oberfläche (12) aufweist, die einen Teil der Trennfläche (12) des Formteils (2, 7) bildet und den Oberflächenkonturaufbau (17) des Spritzgießhohlraumes (16) aufweist (Figuren 3 bis 7).

7. Werkzeug nach Anspruch 6, dadurch gekennzeichnet, daß der Kühlraum (19, 19′) durch im Einsatz (13, 14) eingefräste Nuten (19′) mit dazwischen angeordneten Stegen (22) gebildet ist und die äußere Oberfläche (21′) der Stege (22) sowie der Umrandung (23′) der Nuten (19′) die innere ebene Oberfläche (21) des Einsatzes (13, 14) bildet, über welche der Einsatz (13, 14) gegen die ebene Fläche der Ausnehmung (20) im Formteil (2, 7) flüssigkeitsdicht anpreßbar ist (Figuren 3 bis 7).

8. Werkzeug nach einem der Ansprüche 1 bis 7, dadurch gekennzeichnet, daß der Einsatz (9, 11; 13, 14) als etwa trapezförmige Platte ausgestaltet ist, die zusammen mit der bezüglich der Trennfläche (12) spiegelsymmetrisch ausgebildeten Platte des anderen Formteils (2, 7) im wesentlichen eine Hälfte des Spritzgießhohlraumes (16) von wenigstens einer Seite her abdeckt.

9. Werkzeug nach einem der Ansprüche 1 bis 8, dadurch gekennzeichnet, daß der Kühlraum (19) einen wesentlichen Teil des Einsatzes (13,14) einnimmt.

10. Verwendung des Werkzeuges nach einem der Ansprüche 1 bis 9 zum Anspritzen von Deckel (4) und/oder Boden mit oder ohne Griff (6) an den Papiertubus (1) einer Flüssigkeitspackung (Figur 1).

## Claims

1. A tool for the injection moulding of synthetic plastics material, with an inner mould and a two-part outer mould (2, 7) of which two substantially steel mould parts (2, 7) are adapted to be applied against each other in sealing-tight manner along a plane of separation (12) and moved away from each other again, said movements being brought about by control drives, the injection moulding cavity (16) being formed by a surface contour attachment (17) disposed on the mould parts (2, 7), cooling spaces (19) being disposed behind the surface contour attachment (17) on the side remote from the injection moulding cavity (16), characterised in that the cooling spaces (19) are bounded on at least one side by an insert (9, 11; 13, 14) which is fixed in fluid-tight manner in a recess (20) in the relevant mould part (2, 7).

2. A tool according to Claim 1, characterised in that on at least one of their sides, the cooling spaces (19) are adjacent a plane surface (21, 21') and are connected to at least one cooling water passage (18).

3. A tool according to Claim 1 or 2, characterised in that at least one surface (28) of the insert (13, 14) mounted on the mould part (2, 7) and preferably consisting of a material with a greater heat conductivity coefficient than steel finishes flush with a part of the surfaces (12) of the mould part (2, 7).

4. A tool according to one of Claims 1 to 3, characterised in that the insert (9, 11) comprises an inner flat surface (21) which, while bounding the cooling space (19) in fluid-tight manner, rests on the plane surface (21) of the mould part (2, 7) which accommodates the same cooling space (19) (Figs. 8 and 9).

5. A tool according to Claim 4, characterised in that the cooling space (19) is formed by grooves (19') cut into the mould part (2, 7) and having between them webs (22), the outer surface (21) of the webs (22) and of the encircling edge (23, 23') of the grooves (19') forming the flat surface (21)of the mould part (2, 7) on which (21) the insert (9, 11) rests (Figs. 8 and 9).

6. A tool according to one of Claims 1 to 3, characterised in that the insert (13, 14) mounted in clearance-free manner in the mould part (2, 7) comprises an inner plane surface (21') from which at least one cooling space (19) extends into the material of the insert (13, 14) and in that the insert (13, 14) has opposite it an outer plane surface (12) which forms a part of the plane of separation (12) of the mould part (2, 7) and which comprises the surface contour attachment (17) of the injection moulding cavity (16) (Figs. 3 to 7).

7. A tool according to Claim 6, characterised in that the cooling space (19, 19') is formed by, cut into the insert (13, 14), grooves (19') with webs (22) disposed between them, the outer surface (21') of the webs (22) and of the encircling edge (23') of the grooves (19') forming the inner plane surface (21) of the insert (13, 14) by which the insert (13, 14) can be pressed in fluid-tight manner against the plane surface of the recess (20) in the mould part (2, 7) (Figs. 3 to 7).

8. A tool according to one of Claims 1 to 7, characterised in that the insert (9, 11; 13, 14) is constructed as a substantially trapezoidal plate which, in conjunction with the plate of the other mould part (2, 7), said plate being constructed as a mirrored symmetrical plate in relation to the plane of separation (12), covering substantially one half of the injection moulding cavity (16) from at least one side.

9. A tool according to one of Claims 1 to 8, characterised in that the cooling space (19) occupies a substantial part of the insert (13, 14).

10. Use of the tool according to one of Claims 1 to 9 for moulding top (4) and/or bottom with or without handle (6) onto the paper tube (1) of a liquids package (Fig. 1).

## Revendications

1. Moule pour mouler par injection une matière plastique, comportant un moule intérieur et un moule extérieur en deux parties (2, 7), dont deux moitiés de moule (2, 7), essentiellement en acier, peuvent se rapprocher l'une de l'autre d'une manière étanche et s'écarter l'une de l'autre le long d'une surface de séparation (12) à l'aide de mécanismes de commande, la cavité d'injection (16) étant formée par une structure de contour superficiel (17) disposée contre les moitiés de moule (2, 7), des compartiments de refroidissement (19) étant rapportés sur le côté opposé à la cavité d'injection (16), en arrière de la structure de contour superficiel (17), caractérisé en ce que les compartiments de refroidissement (19) sont limités, au moins sur un côté, par un prisonnier (9, 11 ; 13, 14), qui est fixé d'une manière étanche aux liquides dans un évidement (20) aménagé dans la moitié de moule correspondante (2, 7).

2. Moule selon a revendication 1, caractérisé en ce que les compartiments de refroidissement (19) s'appuient, sur au moins l'un de leurs côtés, contre une surface plane (21 ; 21') et sont reliés à au moins un canal d'eau de refroidissement (18).

3. Moule selon a revendication 1 ou 2, caractérisé en ce qu'au moins une surface (29) du prisonnier (13, 14), fixé à la moitié de moule (2, 7) et de préférence en un acier ayant une conductibilité thermique supérieure à celle de l'acier, est en contact en aboutement avec une partie des surfaces (12) de la moitié de moule (2, 7).

4. Moule selon l'une des revendications 1 à 3, caractérisé en ce que le prisonnier (9, 11) a une surface intérieure plane (21), qui, en délimitant le compartiment de refroidissement (19), s'appuie d'une manière étanche aux liquides sur la surface plane (21) de la moitié de moule (2, 7) qui reçoit le compartiment de refroidissement (19) correspondant (Figures 8 et 9).

5. Moule selon la revendication 4, caractérisé en ce que le compartiment de refroidissement (19) est formé par des rainures (19'), fraisées dans la moitié de moule (2, 7), entre lesquelles sont disposées des traverses (22), et la surface extérieure (21) des traverses, ainsi que celle du rebord (23, 23') des rainures (19'), forment la surface plane (21) de la moitié de moule (2, 7), sur laquelle s'appuie le prisonnier (9, 11) (Figures 8 et 9).

6. Moule selon l'une des revendications 1 à 3, caractérisé en ce que le prisonnier (13, 14), placé sans jeu dans la moitié de moule (2, 7), comporte une surface intérieure plane (21'), à partir de laquelle au moins un compartiment de refroidissement (19) s'étend dans le matériau du prisonnier (13, 14), et que le prisonnier (13, 14) présente en position opposée une surface extérieure plane (12), qui forme une partie de la surface de séparation (12) de la moitié de moule (2, 7) et comporte la structure de contour superficiel (17) de la cavité d'injection (16) (Figures 3 à 7).

7. Moule selon la revendication 6, caractérisé en ce que le compartiment de refroidissement (19, 19') est formé par des rainures (19') insérées par fraisage dans le prisonnier (13, 14), entre lesquelles sont disposées des traverses (22), et la surface extérieure (21') des traverses (22), ainsi que celle du rebord (23') des rainures (19'), forment la surface intérieure plane (21) du prisonnier (13, 14), par laquelle le prisonnier (13, 14) peut être appuyé d'une manière étanche aux liquides contre la surface plane je l'évidement (20) aménagé dans la moitié de moule (2, 7) Figures 3 à 7).

8. Moule selon l'une des revendications 1 à 7, caractérisé en ce que le prisonnier (9, 11 ; 13, 14) est conçu comme une plaque approximativement trapézoïdale, qui, avec la plaque de l'autre moitié de moule (2, 7), cette dernière plaque étant symétrique dans un miroir par rapport à la surface de séparation (12), recouvre essentiellement sur au moins un côté une moitié de la cavité d'injection (16).

9. Moule selon l'une des revendications 1 à 8, caractérisé en ce que le compartiment de refroidissement (19) occupe une partie principale du prisonnier (13, 14).

10. Utilisation du moule selon l'une des revendications 1 à 9 pour rapporter par injection un couvercle (4) et/ou un fond, avec ou sans poignée (6), au tube de papier (1) d'un emballage pour liquides (Figure 1).
